# EUROPÄISCHE PATENTANMELDUNG

(11) **EP 0 558 902 A1**
(43) Veröffentlichungstag der Anmeldung: **08.09.1993**
(21) Anmeldenummer: 93100858.5
(22) Anmeldetag: 21.01.1993
(51) Int. Cl.: H04B 1/18

(54) **Schaltungsanordnung für ein Autoradio zur Betriebsspannungsversorgung eines Antennenverstärkers**

(30) Priorität: 04.03.1992 DE 4206731
(71) Anmelder: Blaupunkt-Werke GmbH, D-31132 Hildesheim (DE)
(72) Erfinder: Fritsche, Knut, W-3100 Celle (DE); Scholz, Hans-Günther, W-3200 Hildesheim (DE)

(57) **Zusammenfassung**

Die Erfindung betrifft eine Schaltungsanordnung für ein Autoradio zur Betriebsspannungsversorgung eines Antennenverstärkers (4) über die Antennenbuchse (A) und das Antennenkabel (6). Die Schaltungsanordnung ist kurzschlußfest und weist Signalklemmen (K2, K3) auf, denen Informationen über die Art der angeschlossenen Antenne (5) bzw. über deren Betriebszustand entnehmbar sind.

## Beschreibung

Die Erfindung betrifft eine Schaltungsanordnung für ein Autoradio zur Betriebsspannungsversorgung eines Antennenverstärkers.

Ist in einem Kraftfahrzeug ein Antennenverstärker oder eine sogenannte aktive Antenne vorgesehen, so müssen diese mit einer Betriebsspannung versorgt werden. Die Betriebsspannungsversorgung erfolgt in bekannter Weise über ein mit einer Betriebsspannungsklemme verbundenes Kabel.

Es ist bekannt, bei stationären Anlagen, wie Hausantennenanlagen, für die Betriebsspannungszuführung eines Antennenverstärkers das Antennenkabel zu benutzen, wobei die Ein- und Auskopplung über dafür vorgesehene Weichen erfolgt. Da an den Betriebsspannungsklemmen von Kraftfahrzeugen jedoch erhebliche Störimpulse auftreten, mußte bisher von einer Doppelnutzung des Antennenkabels abgesehen und der Antennenverstärker über ein separates Kabel mit einer Betriebsspannung versorgt werden.

Der Erfindung liegt die Aufgabe zugrunde, eine Schaltungsanordnung für ein Autoradio zu schaffen, die es gestattet, an die Antennenbuchse des Autoradios eine Antenne anzuschließen, die mit einem Antennenverstärker versehen ist, dem die Versorgungsspannung über das Antennenkabel zuführbar ist.

Diese Aufgabe wird erfindungsgemäß durch die im kennzeichnenden Teil des Anspruchs 1 angegebenen Maßnahmen gelöst.

Die mit der Erfindung erzielten Vorteile bestehen insbesondere darin, daß das Verlegen eines separaten zur Stromversorgung eines Antennenverstärkers dienenden Kabels entfällt, daß sowohl aktive als auch passive Antennen anschließbar sind und daß die Schaltungsanordnung beim Überschreiten eines vorgegebenen Stromwertes die Stromversorgung abschaltet. Zudem sind vorgesehenen Signalklemmen Informationen über den Betriebszustand und über die Art der an der Antennenbuchse angeschlossenen Antenne entnehmbar.

Vorteilhafte Ausgestaltungen der erfindungsgemäßen Schaltungsanordnung sind in den Unteransprüchen angegeben.

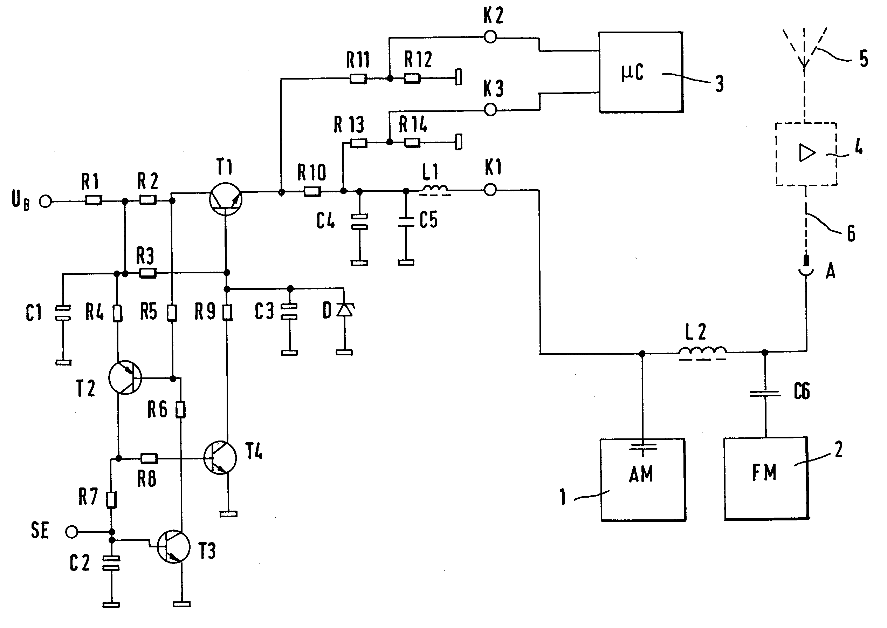

Ein Ausführungsbeispiel der Erfindung ist in der Zeichnung dargestellt und wird im folgenden näher beschrieben.

Eine Betriebsspannungsklemme U_{B} eines nicht näher dargestellten Autoradios ist über einen Siebwiderstand R1 und über einen mit diesem in Reihe geschalteten Widerstand R2 mit dem Kollektor eines ersten NPN-Transistors T1 verbunden. Der über einen Siebkondensator C1 an Masse liegende Verbindungspunkt der Widerstände R1 und R2 ist über einen Widerstand R3 mit der Basis des ersten NPN-Transistors 1 und über einen Widerstand R4 mit dem Emitter eines PNP-Transistors T2 verbunden, dessen Basis über einen Widerstand R5 mit dem Kollektor des ersten NPN-Transistors T1 sowie über einen Widerstand R6 mit dem Kollektor eines mit seinem Emitter an Masse liegenden zweiten NPN-Transistors T3 verbunden ist. Die mit einer als Steuereingang SE dienenden Klemme verbundene, über einen Kondensator C2 an Masse liegende Basis des zweiten NPN-Transistors T3 ist über einen Widerstand R7 mit dem Kollektor des NPN-Transistors T2 und über einen Widerstand R8 mit der Basis eines mit seinem Emitter an Masse liegenden dritten NPN-Transistors T4 verbunden, dessen Kollektor über einen Widerstand R9 mit der Basis des ersten NPN-Transistors T1 verbunden ist. Die über einen Siebkondensator C3 an Masse liegende Basis des ersten NPN-Transistors T1 ist zudem mit der Kathode einer mit ihrer Anode an Masse liegenden Zener-Diode D verbunden, welche dazu dient, den Prozessor vor Spannungen größer als 5 Volt zu schützen, um somit den Betrieb bei Überspannungen abzusichern. Der Emitter des ersten NPN-Transistors T1 ist über einen Meßwiderstand R10, eine erste Induktivität L1, eine Ausgangsklemme K1 und eine zweite Induktivität L2 mit der Antennenbuchse A des Autoradios verbunden. Der Verbindungspunkt vom Meßwiderstand R10 und erster Induktivität L1 ist über einen Siebkondensator C4, dem ein induktionsarmer Kondensator C5 parallel geschaltet ist, mit Masse verbunden. Die Ausgangsklemme K1 ist mit dem eine Gleichstromabblockung aufweisenden Eingang eines AM-Tuners 1 verbunden, während die Antennenbuchse über einen Koppelkondensator C6 mit dem Eingang eines FM-Tuners 2 verbunden ist. Der dem ersten Transistor T1 zugewandte Anschluß des Meßwiderstandes R10 ist über einen Widerstand R11 mit einer über einen Widerstand R12 an Masse liegenden ersten Signalklemme K2 verbunden. Der der ersten Induktivität L1 zugewandte Anschluß des Meßwiderstandes R10 ist über einen Widerstand R13 mit einer über einen Widerstand R14 an Masse liegenden zweiten Signalklemme K3 verbunden. Die Signalklemmen K2 und K3 sind mit Eingängen eines als Erkennungsschaltung 3 wirkenden Mikrocomputers verbunden. An die Antennenbuchse A ist eine übliche passive Autoradiostabantenne oder eine mit einem Antennenverstärker 4 versehene Antenne 5 bzw. eine aktive Antenne anschließbar, wobei die Rückführung des Betriebsstromes über die Abschirmung des Antennenkabels 6 erfolgt.

Durch die erste Induktivität L1 wird eine Dämpfung des Antennensignals verhindert. Ihre Bemessung ist abhängig von den üblichen Eingangsfrequenzen des Autoradios. Die zweite Induktivität L2 verhindert eine Dämpfung des FM- bzw. UKW-Signals.

Aus der an der Betriebsspannungsklemme U_{B} anliegenden Bordnetzspannung wird über den Transistor 1 eine gesiebte Versorgungsspannung für den Antennenverstärker 4 gewonnen. Als Siebmittel dienen die Widerstände R1, R3 und die Kondensatoren C1, C3 und C4. Der Kondensator C5 dient zur Ableitung hochfrequenter Impulse. Überschreitet der durch den Widerstand R2 fließende Strom einen vorgegebenen Maximalwert, so wird der Transistor C2 leitend, schaltet den Transistor T4 durch und sperrt somit den Transistor T2. Das gleichzeitige Durchschalten des Transistors T3 bewirkt eine Verringerung der Basisspannung des Transistors T2, so daß das Basispotential des Transistors T1 weiterhin über den Transistor T4 an Masse gelegt wird und somit die an der Ausgangsklemme K1 anliegende Versorgungsspannung abgeschaltet bleibt. Erst nach einem Abschalten und einem neuen Einschalten der an der Betriebsspannungsklemme U_{B} anliegenden Bordnetzspannung wird die Versorgungsspannung wieder zur Ausgangsklemme K1 durchgeschaltet.

Es besteht jedoch die Möglichkeit, den Betriebszustand der Schaltungsanordnung bewußt zu verändern. Wird ein Spannungsimpuls größer 0,7 Volt an den Steuereingang SE und damit an die Basis des Transistors T3 gelegt, wird die Versorgungsspannung abgeschaltet; wird die Basis von T3 gegen Masse geschaltet, wird die Versorgungsspannung wieder eingeschaltet.

Werden bei den Spannungsteilern R11/R12 und R13/R14 beispielsweise gleiche Teilerverhältnisse vorgesehen, so läßt sich anhand der an den Signalklemmen K2, K3 anliegenden Spannungswerte der jeweilige Betriebszustand der Schaltungsanordnung wie folgt erkennen:

Ist der Spannungswert an K2 größer als an K3, fließt ein Strom. Ein Antennenverstärker ist angeschlossen.
Sind die Spannungswerte an K2 und K3 gleich, fließt kein Strom. Eine herkömmliche Stabantenne ist angeschlossen.
Gehen die Spannungswerte an K2 und K3 gegen Null, hat die Überstromsicherung abgeschaltet. Die Antennenleitung weist einen Kurzschluß auf.

Die vorstehenden Betriebszustände können vom Mikrocomputer 3 ausgewertet und einer Anzeigeeinrichtung zugeführt werden. Ein mit einer derartigen Schaltungsanordung ausgestattetes Autoradio kann somit eine übliche passive Stabantenne erkennen und die hierfür nicht erforderliche Stromversorgung automatisch abschalten.

## Patentansprüche

1. Schaltungsanordnung für ein Autoradio zur Betriebsspannungsversorgung eines Antennenverstärkers,
dadurch gekennzeichnet,
daß die in einem Autoradio vorgesehene Schaltungsanordnung eine einen ersten Transistor (T1) aufweisende Siebschaltung (R1, C1; R3, C3) aufweist, daß die Kollektor-Emitter-Strecke des ersten Transistors (T1) in einem Strompfad angeordnet ist, der eine Betriebsspannungsklemme (U_{B}) des Autoradios über eine erste Induktivität (L1) mit der Antennenbuchse (A) des Autoradios verbindet und daß die Schaltungsanordnung eine weitere Transistoren (T2, T3, T4) aufweisende Schutzschaltung beinhaltet, die beim Überschreiten eines vorgegebenen Stromwertes den im Strompfad angeordneten ersten Transistor (T1) sperrt und damit die Stromversorgung für einen über die Antennenbuchse (A) speisbaren Antennenverstärker (4) abschaltet, daß die als bistabile Schaltung ausgebildete Schutzschaltung einen Steuereingang (SE) aufweist, über den sie in ihren beiden Schaltstellungen schaltbar ist und daß die Anschlüsse eines im Strompfad angeordneten Meßwiderstandes (R10) mit Signalklemmen (K2, K3) in Verbindung stehen, denen Informationen über die an den Anschlüssen des Meßwiderstandes (R10) anliegenden Spannungen entnehmbar sind.

2. Schaltungsanordnung nach Anspruch 1,
dadurch gekennzeichnet,
daß der dem ersten Transistor (T1) zugewandte Anschluß des Meßwiderstandes (R10) über einen Widerstand (R11) mit der über einen Widerstand (R12) an Masse liegenden Signalklemme (K2) verbunden ist und daß der der ersten Induktivität (L1) zugewandte Anschluß des Meßwiderstandes (R10) über einen Widerstand (R13) mit der über einen Widerstand (R14) an Masse liegenden zweiten Signalklemme (K3) verbunden ist.

3. Schaltungsanordnung nach Anspruch 1,
dadurch gekennzeichnet,
daß die der Antennenbuchse (A) zugewandte Klemme (K1) der ersten Induktivität (L1) mit dem Eingang eines AM-Tuners (1) und über eine zweite Induktivität (L2) mit der über einen Kondensator (C6) mit dem Eingang eines FM-Tuners (2) verbundenen Antennenbuchse (A) verbunden ist.

4. Schaltungsanordnung nach Anspruch 1,
dadurch gekennzeichnet,
daß die Betriebsspannungsklemme (U_{B}) des Autoradios über einen Widerstand (R2) mit dem Kollektor eines ersten NPN-Transistors (T1) verbunden ist, daß der der Betriebsspannungsklemme (U_{B}) zugewandte Anschluß des Widerstandes (R2) über einen Widerstand (R3) mit der Basis des ersten NPN-Transistors (T1) und über einen Widerstand (R4) mit dem Emitter eines PNP-Transistors (T2) verbunden ist, dessen Basis über einen Widerstand (R5) mit dem Kollektor des ersten NPN-Transistors (T1) und über einen Widerstand (R6) mit dem Kollektor eines mit seinem Emitter an Masse liegenden zweiten NPN-Transistors (T3) verbunden ist, dessen mit dem Steuereingang (SE) verbundene und über einen Kondensator (C2) an Masse liegenden Basis über einen Widerstand (R7) mit dem Kollektor des PNP-Transistors (T2) und über einen Widerstand (R8) mit der Basis eines mit seinem Emitter an Masse liegenden dritten NPN-Transistors (T4) verbunden ist, dessen Kollektor über einen Widerstand (R9) mit der über einen Kondensator (C3) und einer diesem parallel geschalteten Zener-Diode (D) an Masse liegenden Basis des ersten NPN-Transistors (T1) verbunden ist, und daß der Emitter des ersten NPN-Transistors (T1) über den Meßwiderstand (R10) und die erste Induktivität (L1) mit der Antennenbuchse (A) verbunden ist und daß der Verbindungspunkt von Meßwiderstand (R10) und erster Induktivität (L1) über mindestens einen Kondensator (C4, C5) mit Masse verbunden ist.

5. Schaltungsanordnung nach einem der Ansprüche 1 bis 4,
dadurch gekennzeichnet,
daß die den Signalklemmen (K2, K3) entnehmbaren Informationen einer Auswerteschaltung (3) zugeführt werden, welche anhand der an den Signalklemmen (K2, K3) anstehenden Spannungswerte den Betriebszustand und die Art der an der Antennenbuchse (A) angeschlossenen Antenne erkennt.
